# EUROPEAN PATENT APPLICATION

(11) **EP 1 759 980 A1**
(43) Date of publication of application: **07.03.2007**
(21) Application number: 05425436.2
(22) Date of filing: 17.06.2005
(51) Int. Cl.: B62M 3/00, F16B 39/30, F16B 33/02

(54) **Insert for bicycle component and bicycle component incorporating such an insert**

(71) Applicant: Campagnolo Srl, 36100 Vicenza (VI) (IT)
(72) Inventor: Feltrin, Mauri, 36024 Nanto (Vicenza) (IT)
(74) Representative: Castiglia, Paolo

(57) **Abstract**

An insert (10) for a bicycle component is described, comprising a body (11) provided with an outer surface (14) for the coupling with the aforementioned bicycle component, wherein said outer surface comprises at least one first element (20, 21, 22) adapted to provide a first response to an attempt of relative rotation movement between the bicycle component and the body (11) of the insert (10) and at least one second element (30, 31, 32) adapted to provide a contrasting response to the aforementioned attempt of relative rotation movement. For example, the elements adapted to provide at least contrasting responses can consist of two opposite threadings (22, 32) that extend on the outer surface (14) of the body (11) in two opposite halves thereof. Advantageously, such opposite threadings prevent, during travel, any possibility of mutual sliding between body of the insert and body of the bicycle component that incorporates said insert, thus avoiding deterioration of the insert-bicycle component coupling.

## Description

The present invention relates to an insert for a bicycle component. More specifically, the invention relates to an insert for a bicycle pedal crank.

The invention also relates to a bicycle component, preferably a pedal crank, incorporating such an insert.

Throughout the present description and in the subsequent claims, the term "insert" is used to indicate any element intended to be incorporated in a bicycle component and to act as an interface in the coupling between said bicycle component and another bicycle component. Such an element constitutes in particular a reinforcement element in the coupling between the aforementioned bicycle components.

For example, in the case in which the bicycle component that incorporates the insert is a pedal crank, the insert can be a connection bush to the axle of the bottom bracket and/or to the axle of the pedal and/or to the toothed wheels to equip the crankset of the bicycle.

Throughout the present description and in the subsequent claims, explicit reference shall often be made to a specific embodiment of the bicycle component in which the bicycle component is a pedal crank and the insert is a connection bush to the axle of the bottom bracket of the bicycle. However, it should be understood that the bicycle component could be different, for example the seat post, in which case the insert would be the connection part of the head of the seat post to the seat post tube, or the seat clamp of the seat post, in which case the insert would be the attachment interface of the seat clamp to the seat.

Moreover, although hereafter reference shall be made to perforated inserts for receiving an intermediate connection element such as a screw or an axle, it should be understood that the connection element can constitute by itself the insert, for example directly incorporating into the pedal crank the axle of the pedal or the axle of the bottom bracket.

Different types of pedal cranks with different shapes, materials and manufacturing processes are known, aimed at achieving the goal of keeping the weight as low as possible and at the same time ensuring the desired characteristics of mechanical resistance and reliability of the pedal crank and/or of the coupling between pedal crank and axle of the bottom bracket and/or of the pedal.

Research towards solutions suitable for satisfying the goal of lightness has led to the manufacture of pedal cranks made from composite material.

However, due to the high stresses to which the pedal crank is subjected in use, like the torsion stresses due to the thrusting action of the cyclist during pedalling, it is typically foreseen to insert, into the body of such pedal cranks, reinforcement elements (inserts) that act as an interface between the body of the pedal crank and the elements interacting therewith, like the axle of the bottom bracket, the axle of the pedal and, in the case of the right pedal crank, the toothed wheels.

A first example of a pedal crank in composite material that incorporates reinforcement elements is described in EP 1 281 619 to the same Applicant. The pedal crank described in such a patent is obtained by moulding of a thermosetting composite material inside a mould in which inserts of metallic material are arranged. Such inserts have a substantially tubular body having a substantially cylindrical outer surface and, centrally, a through hole for the connection to the axle of the bottom bracket and/or of the pedal.

During the moulding step, the composite material in the plastic state covers the inserts, surrounding its outer surface apart from in the regions in which the inserts are fixed to suitable support and removal elements from the mould. The material so arranged inside the mould is pressed and heated until it is reticulated. When reticulation is completed, the pedal crank is removed from the mould actuating the removal elements and left to cool at room temperature. In the final configuration, the inserts are substantially incorporated in the material with which the pedal crank body is made.

A drawback associated with the solution described in the aforementioned patent is correlated to the fact that, due to the high torsion stresses to which the pedal crank is subjected during travel, a mutual sliding between insert and pedal crank both in rotation and in translation can occur. This implies a deterioration of the insert-pedal crank coupling, actually preventing the use of the pedal crank.

A second example of a pedal crank in composite material that incorporates a metallic insert is described in US 6,202,506 B1. The insert described in such a patent has, on its outer surface, a series of shaped discs that are spaced apart and incorporated in the composite material with which the pedal crank body is made. Such discs allow the contact surface between insert and composite material of the pedal crank to be increased.

A drawback associated with the solution described in the aforementioned patent is correlated to the fact that, since the outer surface of the insert is mainly cylindrical in shape, the high torsion stresses to which the pedal crank is subjected during travel can cause a relative rotation sliding between insert and pedal crank. This implies a deterioration of the insert-pedal crank coupling, actually preventing the use of the pedal crank.

Other examples of pedal cranks in composite material that incorporate metallic inserts are described on application EP 1 486 412 to the same Applicant. In particular, in such a patent two different types of inserts are described.

A first type of insert has the outer surface partially or totally provided with a left-hand threading. In the pedal crank a hole is formed provided with a corresponding internal threading. The insert-pedal crank coupling therefore takes place by screwing of the insert into the pre-formed hole of the pedal crank. The left-hand threadings ensure that, during pedalling, the insert is subjected to a screwing stress.

Such a solution has the drawback that, when the cyclist stands up on the pedals, with the pedals arranged along a direction not perpendicular to the ground, the insert of the pedal crank arranged towards the rear wheel is subjected to an unscrewing action. In the case of particularly high stresses, for example when the cyclist stands up on the pedals to go over a hole in the ground, a relative roto-translation sliding between insert and pedal crank can occur. This implies a deterioration of the insert-pedal crank coupling, actually preventing the use of the pedal crank.

A second type of insert described in the aforementioned patent has the outer surface suitably shaped, in particular a hexagonal prismatic outer surface or an outer surface equipped with ribs that extend longitudinally on the body of the insert. A hole of a shape matching that of the outer surface of the insert is formed in the pedal crank.

Such a solution has the drawback that the high torsion stresses to which the pedal crank is subjected during travel can determine a mutual translation sliding between insert and pedal crank. This implies a deterioration of the insert-pedal crank coupling, also in this case actually preventing the use of the pedal crank.

The Applicant has therefore noted a drawback common to all pedal cranks of the prior art described above; such a drawback consists in the possibility that, due to the high torsion stresses to which the pedal crank is subjected during travel, mutual slidings between insert and pedal crank occurs, with consequent deterioration of the insert-pedal crank coupling.

The technical problem at the basis of the present invention is that of making an insert for a bicycle component provided with means adapted to prevent any possible mutual sliding between insert and body of the bicycle component with which the insert is associated, thus increasing the reliability of the insert-bicycle component coupling.

The present invention therefore relates, in a first aspect thereof, to an insert for a bicycle component, comprising a body provided with an outer surface for the coupling with a bicycle component, wherein said outer surface comprises at least one first element adapted to provide a first response to an attempt of relative rotational movement between said bicycle component and said body, characterised in that said outer surface comprises at least one second element adapted to provide a contrasting response to said attempt of relative rotational movement between said bicycle component and said body.

Advantageously, the provision on the outer surface of the insert of the present invention of elements adapted to provide a contrasting response to an attempt of relative rotation movement between insert and bicycle component actually prevents any possibility of mutual sliding between insert and pedal crank component when the insert is incorporated into the material that constitutes the body of the bicycle component. The insert-bicycle component coupling is therefore more reliable than those described above with reference to the prior art.

In accordance with the present invention, by suitably orientating the aforementioned elements on the outer surface of the insert it is possible to prevent any mutual movement between insert and pedal crank component, i.e. translation, rotation and/or roto-translation movements.

The aforementioned first and second elements can be made in the form of grooves formed on the outer surface of the insert or in the form of ribs, fins or threads that project from the outer surface of the insert. In general, it is possible to achieve the desired result through at least one pair of whatever elements having whatever shape, provided that such a pair of elements is orientated on the outer surface of the insert so as to be capable of providing contrasting responses to the same attempt of relative rotation movement between insert and bicycle component.

Preferably, the body of the insert of the present invention is substantially tubular and extends along a longitudinal axis. More preferably, the insert of the present invention is used as an interface element in the coupling between pedal crank and axle of the bottom bracket of the bicycle, or between pedal crank and axle of the pedal or, in the case of the right pedal crank, between pedal crank and toothed wheels of the crankset of the bicycle.

Preferably, said at least one first element extends on said outer surface for at least one first length inclined, with respect to a generatrix of said body parallel to said longitudinal axis, by at least one first angle of between 0 and 90° and said at least one second element extends on said outer surface for at least one second length inclined, with respect to said generatrix, by at least one second angle of between 90° and 180°.

Advantageously, an orientation of the aforementioned first and second elements as described above allows opposite reaction force components to be obtained at the first and second elements, respectively, in response to a given stress on the insert and/or on the bicycle component with which the insert is associated. Such opposite components are effective in preventing any possible mutual movement between insert and bicycle component that should occur as a consequence of the application of the aforementioned stress.

More preferably, said first angle and said second angle are supplementary angles. In such a case, advantageously, the reaction force components are exactly equal and opposite, thus making a substantial dynamic equilibrium at the interface between insert and bicycle component and actually preventing any possible mutual movement that should occur as a consequence of the application of said stress.

Preferably, said at least one first length is at least partially defined along at least one first spiral path that extends on said outer surface in a first direction of rotation and said at least one second length is at least partially defined along at least one second spiral path that extends on said outer surface in a second direction of rotation opposite said first direction of rotation.

More preferably, said at least one first spiral path is a first helical path that extends on said outer surface with a first pitch in said first direction of rotation and said at least one second spiral path is a second helical path that extends on said outer surface with a second pitch in said second direction of rotation opposite said first direction of rotation.

More preferably, said second pitch is equal to said first pitch.

In a particularly preferred embodiment of the insert of the present invention, said at least one first element comprises at least one first threading that extends on said outer surface along said at least one first helical path and said at least one second element comprises at least one second threading that extends on said outer surface along said at least one second helical path.

Preferably, said at least one first threading consists of two distinct threads that extend on said outer surface according to said at least one first helical path. Even more preferably, said at least one second threading also consists of two distinct threads that extend on said outer surface according to said at least one second helical path.

Advantageously, in such a way two opposite threadings, each having two threads, are made on the outer surface of the insert. Such threadings are particularly effective in preventing any possible mutual movement between insert and bicycle component and in increasing the grasping surface between insert and material that constitutes the body of the bicycle component.

Preferably, the two threads of the first threading and, more preferably, also the two threads of the second threading are out of phase by 180° in a cross section of said body.

Alternatively, said at least one first threading consists of a single thread. In such a case, preferably, said at least one second threading also consists of a single thread.

In such a case, two opposite threadings, each having a single thread, are made on the outer surface of the insert.

In accordance with an alternative embodiment of the insert of the present invention, said at least one first element comprises at least one first groove that extends on said outer surface along at least part of said at least one first helical path and said at least one second element comprises at least one second groove that extends on said outer surface along at least part of said at least one second helical path.

In accordance with a further alternative embodiment of the insert of the present invention, said at least one first element comprises at least one first rib that extends on said outer surface along at least part of said at least one first helical path and said at least one second element comprises at least one second rib that extends on said outer surface along at least part of said at least one second helical path.

Preferably, in all of the embodiments described above, said outer surface comprises a first portion that extends at least in part on a first half of said body along said longitudinal axis and a second portion that extends at least in part on the other half of said body along said longitudinal axis and in which said at least one first helical path extends in said first portion and said at least one second helical path extends in said second portion.

Preferably, the insert of the present invention comprises at least one fin projecting canti-levered from said outer surface. Advantageously, such a fin allows the grasping surface between the insert and the material that constitutes the body of the bicycle component to be increased.

Even more preferably, said second portion entirely extends on said first half of said body and said first portion extends on the other half of said body for a length less than the length of said other half of the body, and in which between said first and second portions an intermediate portion is defined that comprises said at least one fin.

Preferably, said at least one fin extends annularly around said body.

In accordance with a further alternative embodiment thereof, the insert of the present invention comprises a plurality of first grooves that extend along said first helical path and a plurality of second grooves that extend along said second helical path, said first and second grooves alternating along said longitudinal axis. Advantageously, the opposite grooves on the outer surface of the insert ensure that, when the grooves are filled by the material that constitutes the body of the bicycle component, there is no mutual sliding between insert and bicycle component that incorporates the insert.

In a variant thereof, the insert of the present invention comprises a plurality of first ribs that extend along said first helical path and a plurality of second ribs that extend along said second helical path, said first and second ribs alternating along said longitudinal axis. Advantageously, the opposite ribs on the outer surface of the insert ensure that, when the ribs fill the material that constitutes the body of the bicycle component, there is no mutual sliding between insert and bicycle component that incorporates the insert.

In a further variant, the insert of the present invention comprises a plurality of grooves that extend along said first helical path and a plurality of ribs that extend along said second helical path, said grooves alternating along said longitudinal axis with said ribs. Also in this case, advantageously, the ribs opposite the grooves on the outer surface of the insert ensure that, when the ribs fill the material that constitutes the body of the bicycle component and the grooves are filled by such a material, there is no mutual sliding between insert and bicycle component that incorporates the insert.

Irrespective of the specific embodiment of the insert of the present invention, preferably, the body of the insert comprises a through hole extending along said longitudinal axis.

More preferably, said through hole has a square section and has, at a free end thereof, a widened zone defining an undercut surface. Advantageously, such geometry is suitable for allowing the coupling between an insert incorporated in the body of a pedal crank and an axle of the bottom bracket, such an axle being typically square shaped. In such a case, indeed, the undercut surface is suitable for housing in abutment the widened head of a locking screw that engages in the through hole of the insert and that is intended to engage with the end of the square axle of the bottom bracket.

Preferably, the body of the insert of the present invention is made from metallic material (preferably aluminium alloy) or, alternatively, from composite material comprising a structural fibre (preferably carbon fibre).

In a second aspect thereof, the present invention relates to a bicycle component, comprising at least one insert for the coupling with another bicycle component, characterised in that said at least one insert is an insert according to any one of the previous claims.

Advantageously, such a bicycle component, comprising the insert of the present invention, allows all of the advantages mentioned above with respect to such an insert to be achieved.

Preferably, such a bicycle component is a pedal crank.

Further characteristics and advantages of the present invention shall become clearer from the following detailed description of some preferred embodiments, made with reference to the attached drawings. In such drawings:
- figure 1 is a schematic front view of a specific embodiment of a bicycle component, in particular a spoked right pedal crank, which incorporates the insert of the present invention;
- figure 2 is a sectional view along the plane indicated by the lines I-I of the bicycle component of figure 1;
- figure 3 is a schematic perspective view of a first embodiment of the insert of the present invention;
- figure 4 is a schematic side view of the insert of figure 3;
- figure 5 is a sectional view of the insert of figure 3 along the plane indicated by the lines A-A in figure 4;
- figure 6 is a schematic perspective view of a second embodiment of the insert of the present invention;
- figure 7 is a schematic side view of the insert of figure 6;
- figure 8 is a sectional view of the insert of figure 6 along the plane indicated by the lines A-A in figure 7;
- figure 9 is a schematic side view of a third embodiment of the insert of the present invention;
- figure 10 is a schematic side view of a fourth embodiment of the insert of the present invention;
- figure 11 is a schematic side view of a fifth embodiment of the insert of the present invention;
- figure 12 is a schematic side view of a sixth embodiment of the insert of the present invention.

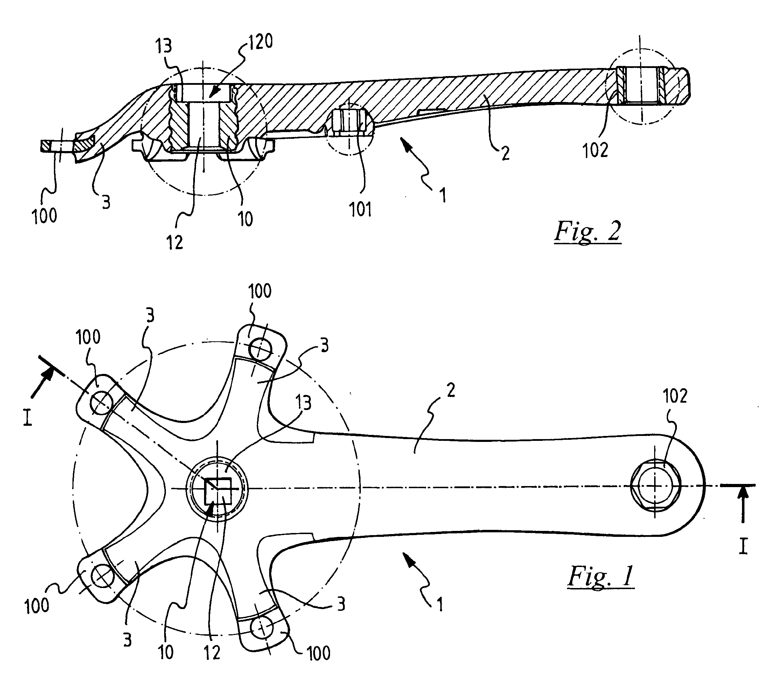

In figure 1 and 2, a bicycle component in accordance with the present invention is indicated with 1. It is, in particular, a spoked right pedal crank.

The pedal crank 1 comprises a body 2, preferably made from composite material, in which an insert 10 is housed, said insert being adapted to act as an interface for the connection of the pedal crank 1 to an axle (not illustrated) of the bottom bracket of the bicycle. The insert 10 is an insert in accordance with the present invention and the structural characteristics thereof shall be described in detail in the rest of the present description.

The man skilled in the art shall understand that what is said hereafter with reference to the insert 10 of the present invention is also applicable in the case in which such an insert is incorporated in pedal cranks of a different shape and type to the one illustrated in figures 1 and 2 and/or in the case in which such an insert is used in bicycle components other than pedal cranks, like for example the seat post, in which case the insert would be the connection part of the head of the seat-support to the seat tube, or the bracket of the seat-support, in which case the insert would be the attachment interface of the bracket to the seat.

The pedal crank 1 has a certain number of spokes 3, four in the case illustrated, for the connection of the pedal crank 1 to the toothed wheels (not illustrated) of the crankset of the bicycle. For such a purpose, each spoke 3 is equipped with a respective insert 100 adapted to act as an interface in the coupling of the spoke 3 with the toothed wheels of the crankset of the bicycle.

The pedal crank 1 also comprises an insert 101 (visible in figure 2) embedded in the body 2 of the pedal crank, again for the coupling with the toothed wheels of the crankset of the bicycle, and an insert 102 for the coupling with a pedal (not illustrated) of the bicycle.

The inserts 100 and 101 are preferably arranged equally spaced apart along the same virtual circumference, illustrated with a dotted and dashed line in figure 1. In other types of right pedal crank, the number of spokes can be different and the distribution of the spokes with respect to the longitudinal middle axis of the pedal crank 1 can be such that the connection to the toothed wheels occurs just through the spokes 3 and therefore the insert 101 in the body 2 of the pedal crank is not required.

The inserts 100, 101 and 102 are of the conventional type and therefore are not described here. It is however clear that such inserts can be made in a totally analogous and/or equivalent way to the insert 10 of the present invention.

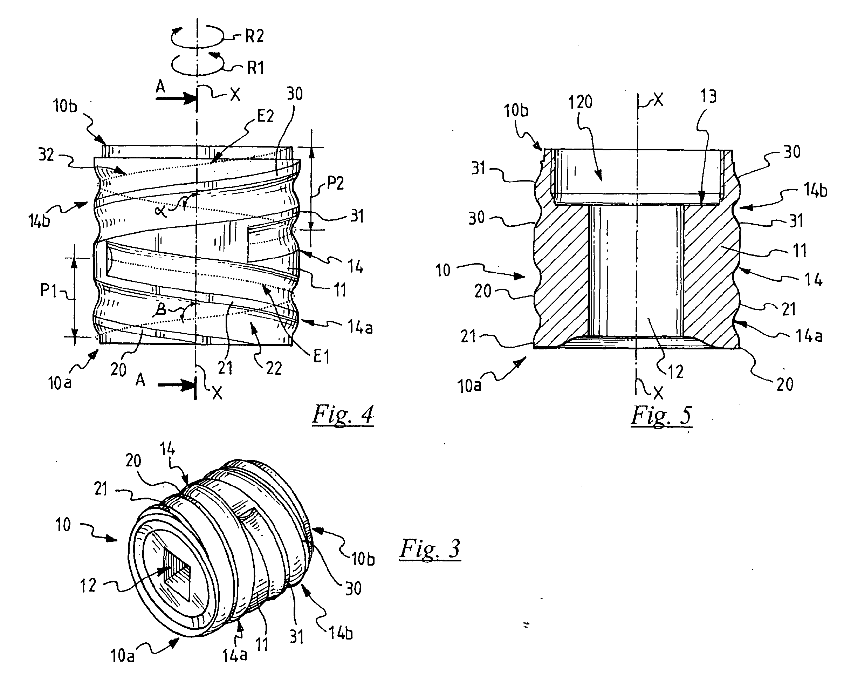

As illustrated in figures 3 to 8, the insert 10 comprises a substantially tubular body 11 that has a through hole 12 on its inside for the connection to the central axle of the bottom bracket.

The insert 10 extends along a main axis X-X from a proximal end 10a in assembled state, that is on the side of the bottom bracket, to a distal end 10b in assembled state, that is at the opposite side to the bottom bracket.

The through hole 12 has a square section to receive and coupling with the end of the axle (also square in shape) of the bottom bracket. The through hole 12 has, at the distal end 10b of the insert 10, a widened annular zone 120 (see for example figure 5) with respect to the size of the through hole 12, which makes an undercut surface 13 adapted to receive in abutment the widened head of a locking screw, not shown, which engages in a threaded hole made in the square end of the axle of the bottom bracket.

It is clear that in other embodiments the through hole 12 of the insert 10 could have a different shape according to the shape of the end of the central axle.

In accordance with the present invention, the body 11 of the insert 10 has an outer surface 14 provided with elements adapted to provide a contrasting response to an attempt of relative rotation movement between insert 10 and pedal crank 1, so as to prevent possible mutual movements between insert 10 and pedal crank 1 during travel, which would cause a deterioration of the insert-pedal crank coupling.

In particular, such elements are projections or recesses orientated so that at least one of them extends on the outer surface 12 of the insert 10 along a direction inclined, with respect to a generatrix of the body 11 parallel to the longitudinal axis X-X, by a first angle α of between 0 and 90° (the extremes being excluded) and at least another of such projections or recesses extends on the outer surface 12 along a direction inclined, with respect to said generatrix, by a second angle β of between 90° and 180° (the extremes being excluded), such an angle β preferably being supplementary to the aforementioned angle α.

Preferably, such inclined directions are identified by respective helical paths E1, E2 indicated with a broken line in figure 4.

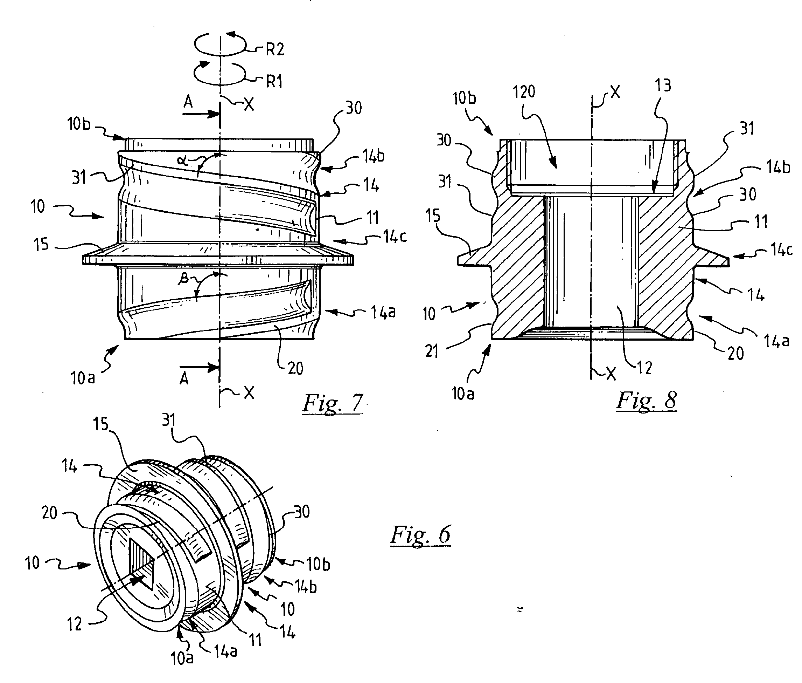

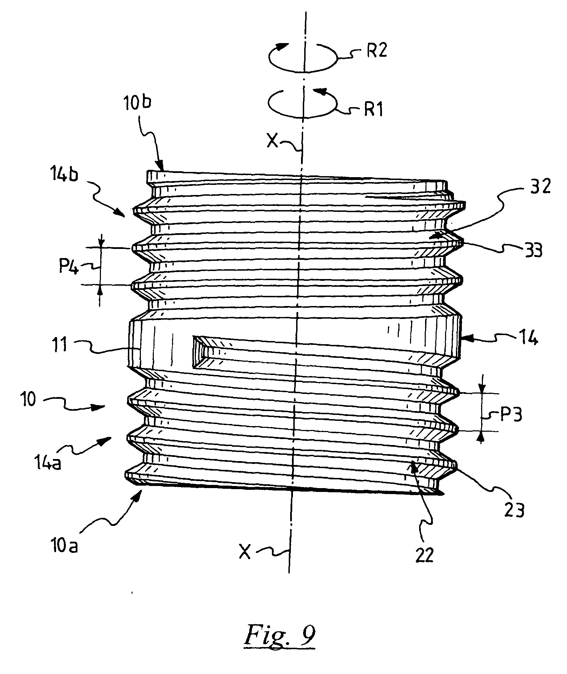

Figures 3-5 show a first embodiment of the insert 10. A first alternative embodiment is illustrated in figures 6-8. Further alternative embodiments are illustrated in figures 9-12.

In the figures quoted above, identical structural elements are indicated with the same reference numeral.

With reference to the embodiment of the insert 10 illustrated in figures 3-5, the elements adapted to provide a contrasting response to an attempt of relative rotation movement between insert and pedal crank consist of opposite threadings 22, 32 that extend onto the outer surface 14 of the insert 10 in two opposite halves 14a, 14b thereof along respective helical paths E1, E2.

In particular, on the outer surface 14 of the insert 1 a proximal portion 14a (the lower portion in the view of figure 4 or 5), which extends on the insert 10 for about half of its length along the longitudinal axis X-X, and a distal portion 14b (the upper portion in the view of figure 4 or 5), which extends on the insert 10 for the other half of its length along the longitudinal axis X-X are defined.

The proximal portion 14a of the insert 10 has a first thread 20 that winds as a helix, starting roughly from the proximal end 10a of the insert 10, up to roughly the half-way point of the insert 10 in an anti-clockwise direction of rotation R1 (looking at the insert from below, with reference to figure 4) with pitch P1. A second thread 21 winds as a helix contiguous to the first thread 20 in the same anti-clockwise direction of rotation R1 and with the same pitch P1 as the first thread 20, also roughly from the proximal end 10a of the insert 10 up to roughly the half-way point of the insert 10. Such geometry substantially realizes a threading 22 with two threads that extends on the outer surface 14 of the insert 10 along the helical path E1 with pitch P1 and direction of rotation R1. The two threads 20, 21 are preferably out of phase by 180° in the cross section of the insert 10.

In the same way, the distal portion 14b of the insert 10 has a first thread 30 that winds as a helix with pitch P2 starting from about the half-way point of the insert 10 up to the distal end 10b of the insert 10 in a clock-wise direction of rotation R2 (again, looking at the insert from below, with reference to figure 4), opposite the clockwise direction of rotation R1 of the threads 20, 21 of the proximal portion 14a. A second thread 31 winds as a helix contiguous to the first thread 30 and with the same pitch P2 and in the same direction of rotation R2 as the latter, also roughly from the half-way point of the insert 10 up to the distal end 10b. Such geometry substantially realizes a threading with two threads 32 that winds onto the outer surface 14 of the insert 10 along the helical path E2 with pitch P2 and direction of rotation R2. The two threads 30, 31 are also preferably out of phase by 180° in the cross section of the insert 10.

Preferably, the pitch P2 is selected equal to the pitch P1 but, in different variant embodiments, the values of the pitch P1 and P2 could be chosen to be different to each other.

Obviously, the direction of rotation of the threadings 22, 32 in the proximal portion 14a and distal portion 14b of the outer surface 14 can be the inverse to what is described above.

Figures 6 to 8 illustrate an alternative embodiment of the insert 10 of the present invention. Such an embodiment differs from the one illustrated in figures 3-5 in that the proximal portion 14a of the outer surface of the insert 10 extends on the insert 10 for a length less than half its length along the longitudinal axis X-X. Between the proximal portion 14a and the distal portion 14b an intermediate portion 14c is therefore defined that comprises a annular fin 15 projecting from the outer surface 14 of the insert 10. The fin 15 is therefore in the central zone of the insert 10, but displaced along the axis X-X towards the proximal end 10a with respect to its longitudinal middle location. In the illustrated embodiment, the fin 15 widens in the direction from distal to proximal.

The fin 15 allows the interface surface between the insert 10 and the material with which the body 2 of the pedal crank 1 is made to be increased, thus increasing the grasping between insert and pedal crank.

In the illustrated embodiment, the proximal portion 14a of the insert 10 has a first thread 20 that winds as a helix, starting roughly from the proximal end 10a of the insert 10, up to the fin 15 in a clockwise direction of rotation R1 (looking at the insert from below, with reference to figure 7) with pitch P1. A second thread 21, visible only in figure 8, winds as a helix contiguous to the first thread 20 in the same clockwise direction of rotation R1 and with the same pitch P1 as the first thread 20, also roughly from the proximal end 10a of the insert 10 up to the fin 15. Also in this case a threading with two threads is substantially realized. The two threads 20, 21 are preferably out of phase by 180° in the cross section of the insert 10.

In the same way, the distal portion 14b of the insert 10 has a first thread 30 that winds as a helix with pitch P2 starting from the fin 15 up to the distal end 10b of the insert 10 in a anti-clockwise direction of rotation R2 (again, looking at the insert from below, with reference to figure 7), opposite the clockwise direction of rotation R1 of the threads 20, 21 of the proximal portion 14a. A second thread 31 winds as a helix contiguous to the first thread 30 and with the same pitch P2 and in the same direction of rotation R2 as it, also roughly from the fin 15 up to the distal end 10b. Also in this case a threading with two threads is substantially realized. The two threads 30, 31 are also preferably out of phase by 180° in the cross section of the insert 10.

In embodiments that are not illustrated, on the outer surface 14 of the insert 10, instead of the aforementioned threadings, grooves or ribs projecting from the outer surface 14 are made that winds as a helix on the body 11 of the insert 10 in a way totally consistent with the aforementioned threadings 22 and 32. Embodiments are foreseen in which, in addition to the grooves or ribs, a fin 15 of the type illustrated in figures 6-8 is provided.

Figure 9 shows a further embodiment of the insert 10 of the present invention that differs from the embodiment illustrated in figures 3-5 only in that each of the threadings 22, 32 consists of a single respective thread 23, 33. In particular, the threading 22 made in the proximal portion 14a is defined by a single thread 23 that winds as a helix on the outer surface 14 roughly from the proximal end 10a of the insert 10, up to roughly the half-way point of the insert 10 in an anti-clockwise direction of rotation R1 (looking at the insert from below, with reference to figure 9) with pitch P3. In the same way, the threading 32 made in the distal portion 14b of the insert 10 is defined by a single thread 33 that winds as a helix with pitch P4 starting from about the half-way point of the insert 10 up to the distal end 10b of the insert 10 in a clockwise direction of rotation R2 (again, looking at the insert from below, with reference to figure 9), opposite the anti-clockwise direction of rotation R1 of the thread 23 of the proximal portion 14a.

In the example illustrated in figure 9, the pitch P4 is selected equal to the pitch P3 and of a value lower than the value of the pitch P1 and P2 of the embodiments described above. It is obvious that the pitches P3 and P4 can in any case be different to each other, possibly even equal to or greater than the values of the pitch P1 and P2.

Also in this case, embodiments are foreseen in which, in addition to the threadings 22 and 23, a fin 15 of the type illustrated in figures 6-8 is provided.

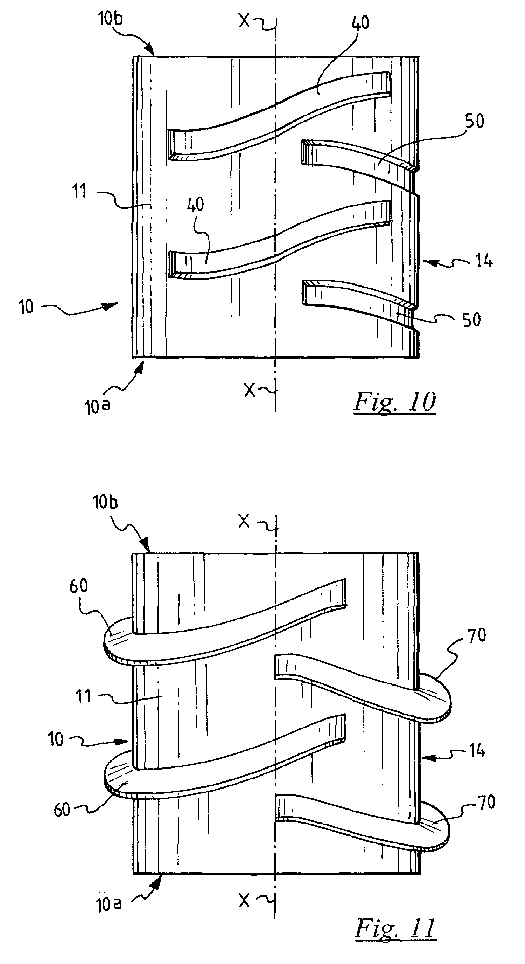

Figure 10 shows a further embodiment of the insert 10 of the present invention. In such an embodiment, the insert 10 comprises, on the outer surface 14 thereof, a plurality of first grooves 40 that extend along a first helical path and a plurality of second grooves 50 that extend along a second helical path opposite the first helical path. The second grooves 50 alternate with the first grooves 40 along the longitudinal axis X-X.

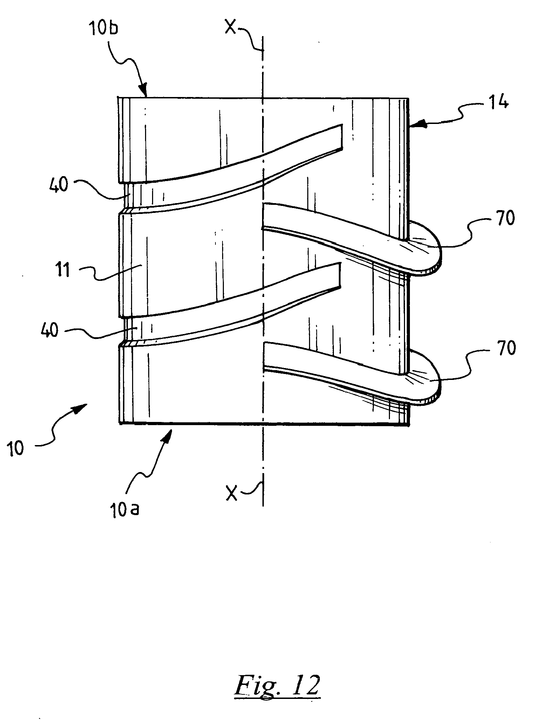

Figure 11 shows a further embodiment of the insert 10 of the present invention. In such an embodiment, the insert 10 comprises, on the outer surface 14 thereof, a plurality of first ribs 60 that extend along a first helical path and a plurality of second ribs 70 that extend along a second helical path opposite the first helical path. The second ribs 70 alternate with the first ribs 60 along the longitudinal axis X-X.

Figure 12 shows a further embodiment of the insert 10 of the present invention. In such an embodiment, the insert 10 comprises, on the outer surface 14 thereof, a plurality of grooves 40 that extend along a first helical path and a plurality of ribs 70 that extend along a second helical path opposite the first helical path. The ribs 70 alternate with the grooves 40 along the longitudinal axis X-X.

Although the embodiments described above all refer to inserts 10 having a substantially cylindrical outer surface 14 (apart from the presence of the aforementioned elements adapted to provide a contrasting response to an attempt of relative rotation movement between insert 10 and bicycle component that incorporates the insert), what has been stated is also applicable to the case in which the insert has a non-circular cross section (for example elliptical, squared, rectangular, etc.), or to the case in which the insert has cross sections of different shape along the longitudinal axis X-X (for example in the case of inserts having a substantially frusto-conical outer surface), or to the case in which the insert has both a non-circular cross section and cross sections of a different shape along the longitudinal axis X-X. In such cases, the aforementioned elements adapted to provide a contrasting response to an attempt of relative rotation movement between insert 10 and bicycle component that incorporates the insert extend on the insert along opposite spiral paths, in a substantially analogous way to what has been stated above with reference to the helical paths.

Irrespective of the specific embodiment thereof, the insert 10 is preferably made from metallic material (such as aluminium alloy). In different variant embodiments, the insert 10 could be made from another material, for example composite material comprising a structural fibre, preferably carbon fibre, embedded in a matrix of thermoplastic or thermosetting polymeric material. Inserts of this type are described in European patent application n° 04425151.0 to the same Applicant, incorporated here by reference.

The pedal crank 1 with incorporated insert 10 can be manufactured according to any of the methods known to the man skilled in the art, for example with the co-moulding method described in the aforementioned patent EP 1 281 609 to the same Applicant.

## Claims

1. Insert (10) for a bicycle component, comprising a body (11) provided with an outer surface (14) for the coupling with a bicycle component (1), wherein said outer surface (14) comprises at least one first element (20, 21, 22, 40, 60) adapted to provide a first response to an attempt of relative rotational movement between said bicycle component (1) and said body (11), **characterised in that** said outer surface (14) comprises at least one second element (30, 31, 32, 50, 70) adapted to provide a contrasting response to said attempt of relative rotational movement between said bicycle component (1) and said body (11).

2. Insert (10) according to claim 1, wherein said at least one first element comprises at least one first groove (40) and said at least one second element comprises at least one second groove (50).

3. Insert (10) according to claim 1 or 2, wherein said at least one first element comprises at least one first rib (60) projecting from said outer surface (14) and said at least one second element comprises at least one second rib (70) projecting from said outer surface (14).

4. Insert (11) according to claim 1, wherein said at least one first element comprises at least one first groove (40) and said at least one second element comprises at least one first rib (70) projecting from said outer surface (14).

5. Insert (10) according to any one of the previous claims, wherein said body (11) is substantially tubular and extends along a longitudinal axis (X-X).

6. Insert (10) according to claim 5, wherein said at least one first element (20, 21, 22, 40, 60) extends on said outer surface (14) for at least one first length inclined, with respect to a generatrix of said body (11) parallel to said longitudinal axis (X-X), by at least one first angle (α) of between 0 and 90° and said at least one second element (30, 31, 32, 50, 70) extends on said outer surface for at least one second length inclined, with respect to said generatrix, by at least one second angle (β) of between 90° and 180°.

7. Insert (10) according to claim 6, wherein said first angle (α) and said second angle (β) are supplementary angles.

8. Insert (10) according to claim 6 or 7, wherein said at least one first length is at least partially defined along at least one first spiral path that extends on said outer surface (14) in a first direction of rotation (R1) and said at least one second length is at least partially defined along at least one second spiral path that extends on said outer surface (14) in a second direction of rotation (R2) opposite said first direction of rotation (R1).

9. Insert (10) according to claim 8, wherein said at least one first spiral path is a first helical path (E1) that extends on said outer surface (14) with a first pitch (P1) in said first direction of rotation (R1) and said at least one second spiral path is a second helical path (E2) that extends on said outer surface (14) with a second pitch (P2) in said second direction of rotation (R2) opposite said first direction of rotation (R1).

10. Insert (10) according to claim 8 or 9, wherein said second pitch (P2) is equal to said first pitch (P1).

11. Insert (10) according to claim 9 or 10, wherein said at least one first element comprises at least one first threading (22) that extends on said outer surface (14) along said at least one first helical path (E1) and said at least one second element comprises at least one second threading (32) that extends on said outer surface (14) along said at least one second helical path (E2).

12. Insert (10) according to claim 11, wherein said at least one first threading (22) consists of two distinct threads (20, 21) that extend on said outer surface (14) according to said at least one first helical path (E1).

13. Insert (10) according to claim 12, wherein said two threads (20, 21) are out of phase by 180° in a cross section of said body (11).

14. Insert (10) according to any one of claims from 9 to 13, wherein said at least one second threading (32) consists of two distinct threads (30, 31) that extend on said outer surface (14) according to said at least one second helical path (E2).

15. Insert (10) according to claim 14, wherein said two threads (30, 31) are out of phase by 180° in a cross section of said body (11).

16. Insert (10) according to claim 11, wherein said at least one first threading (22) consists of a single thread (23).

17. Insert (10) according to claim 11 or 16, wherein said at least one second threading (32) consists of a single thread (33).

18. Insert (10) according to claim 9 or 10, wherein said at least one first element comprises at least one first groove (40) that extends on said outer surface (14) along at least part of said at least one first helical path (E1) and said at least one second element comprises at least one second groove (50) that extends on said outer surface (14) along at least part of said at least one second helical path (E2).

19. Insert (10) according to claim 9 o 10, wherein said at least one first element comprises at least one first rib (60) that extends on said outer surface (14) along at least part of said at least one first helical path (E1) and said at least one second element comprises at least one second rib (70) that extends on said outer surface (14) along at least part of said at least one second helical path (E2).

20. Insert (10) according to any one of claims from 9 to 19, wherein said outer surface (14) comprises a first portion (14a) that extends at least in part on a first half of said body (11) along said longitudinal axis (X-X) and a second portion (14b) that extends at least in part on the other half of said body (11) along said longitudinal axis (X-X) and wherein said at least one first helical path (E1) extends in said first portion (14a) and said at least one second helical path (E2) extends in said second portion (14b).

21. Insert according to any one of the previous claims, comprising at least one fin (15) projecting canti-levered from said outer surface (14).

22. Insert (10) according to claim 21 when dependent upon claim 20, wherein said second portion (14b) entirely extends on said first half of said body (11) and said second portion (14a) extends on the other half of said body (11) for a length less than the length of said half of the body, and wherein between said first and second portions (14a, 14b) an intermediate portion (14c) is defined that comprises said at least one fin (15).

23. Insert (10) according to claim 21 or 22, wherein said at least one fin (15) extends annularly around said body (11).

24. Insert (10) according to claim 18, comprising a plurality of first grooves (40) that extend along said first helical path (E1) and a plurality of second grooves (50) that extend along said second helical path (E2), said first and second grooves (40, 50) alternating along said longitudinal axis (X-X).

25. Insert (10) according to claim 19, comprising a plurality of first ribs (60) that extend along said first helical path (E1) and a plurality of second ribs (70) that extend along said second helical path (E2), said first and second ribs (60, 70) alternating along said longitudinal axis (X-X).

26. Insert (10) according to any one of claims from 8 to 10, comprising a plurality of grooves (40) that extend along said first helical path (E1) and a plurality of ribs (70) that extend along said second helical path (E2), said grooves (40) alternating along said longitudinal axis (X-X) with said ribs (70).

27. Insert (10) according to any one of claims from 5 to 26, wherein said body (11) comprises a through hole (12) extending along said longitudinal axis (X-X).

28. Insert (10) according to claim 27, wherein said through hole (12) has a square section and has, at a free end thereof (12a), a widened zone defining an undercut surface (13).

29. Insert (10) according to any one of the previous claims, wherein said body (11) is made from metallic material.

30. Insert (10) according to claim 29, wherein said metallic material is aluminium alloy.

31. Insert (10) according to any one of claims from 1 to 28, wherein said body (11) is made from composite material comprising a structural fibre.

32. Insert (10) according to claim 31, wherein said structural fibre is carbon fibre.

33. Bicycle component (1), comprising at least one insert (10) for the coupling with another bicycle component, **characterised in that** said at least one insert (10) is an insert according to any one of the previous claims.

34. Bicycle component (1) according to claim 33, **characterised in that** it is a pedal crank.
